# EUROPEAN PATENT APPLICATION

(11) **EP 1 770 806 A1**
(43) Date of publication of application: **04.04.2007**
(21) Application number: 06020426.0
(22) Date of filing: 28.09.2006
(51) Int. Cl.: H01M 8/00, H01M 8/04, F24D 3/00, F24H 1/00

(54) **Fuel cell heating system**

(30) Priority: 29.09.2005 KR 20050091633
(71) Applicant: LG Electronics Inc., Yongdungpo-gu Seoul (KR); LG Chem, Ltd., Yongdungpo-Gu Seoul (KR)
(72) Inventor: Heo Seong-Geun, Bucheon, Gyeonggi-Do (KR); Kim Tae-Won, Anyang, Gyeonggi-Do (KR)
(74) Representative: Urner, Peter

(57) **Abstract**

This disclosure relates to a fuel cell heating and electricity generating system. In one example embodiment a fuel cell heating system includes a fuel cell; a storage tank configured to store a liquid heated by heat generated at the fuel cell; a radiating unit installed at a space requiring a heat supply; a first connection line connecting the storage tank to the radiating unit, the first connection line configured to facilitate the flow of fluid from the storage tank to the radiating unit; and a second connection line connecting the storage tank to the radiating unit, the second connection line configured to facilitate the flow of fluid from the radiating unit to the storage tank.

## Description

### RELATED APPLICATION

The present disclosure claims the benefit of Korean Application No. 10-2005-0091633, filed on September 29, 2005, which is hereby incorporated by reference in its entirety.

### BACKGROUND OF THE INVENTION

### 1. Field of the Invention

The present invention relates to a heating system. More particularly, embodiments of the invention relate to a fuel cell that is particularly suited for the generation of electrical energy and heat for use by a heating system, such as might be used in a home or other structure.

### 2. Description of the Background Art

The use of fossil fuels as energy sources can result in the production of harmful environmental pollutants. Fossil fuels are also becoming scarcer due to an ever increasing demand, and thus are becoming increasingly expensive. Consequently, alternatives to fossil fuels that are lower cost and/or more environmentally friendly are increasingly important. One such alternative is a fuel cell, which can be used as a source of electrical power.

A fuel cell is generally configured to directly convert chemical energy into electric energy. There are various types of fuel cells, including, but not limited to, Phosphoric Acid Fuel Cells (PAFCs), Alkaline Fuel Cells (AFC), Proton Exchange Membrance Fuel Cells (PEMFCs), Molten Carbonate Fuel Cells (MCFCs), Solid Oxide Fuel Cells (SOFCs), and Direct Methanol Fuel Cells (DMFCs). Although there are different types, fuel cells typically function in a similar manner. For example, in a typical fuel cell operation the cell electrochemically reacts a hydrogen-rich fuel and oxygen-rich air. The fuel cell then converts a portion of the energy difference between the pre-reaction and post-reaction chemicals into electrical energy. A fuel cell is thus capable of continuously generating electric energy while hydrogen and oxygen are supplied thereto.

Fuel cells can be used to generate electrical power in a wide variety of environments and applications. For example, fuel cells are used to power electric automobiles and other vehicles. Fuel cells are also used to supply power to homes and offices. For example, a residential fuel cell serves to supply electric energy to home electric appliances, home lighting devices, and the like.

One advantage of a fuel cell is that it produces useful energy but does so in a manner that does not result in the emission of harmful pollutants to the environment. In addition to producing electrical energy however, the typical fuel cell also generates relatively large amounts of heat and water as byproducts. While these byproducts are not generally harmful to the environment, they are often not utilized and are merely discarded as waste.

Hence, it would be desirable to provide the ability to take advantage of the benefits of a fuel cell system, such as the lower costs and environmental benefits, but do so in a manner that utilizes at least some of the fuel cell's operating byproducts.

### SUMMARY OF THE INVENTION

Accordingly, embodiments of the present invention are directed to a system that utilizes the energy generating capabilities of a fuel cell, but does so in a manner that also takes advantage of the byproducts of the operation of a fuel cell, such as the excess heat and/or water. In particular, presently preferred embodiments are directed to a fuel cell electricity generating system that is implemented to also productively utilize the heat byproduct, for example, to heat a residence, office or other structure. Embodiments of the present invention thus minimize the production of pollutants and at the same time provide a low cost and environmentally friendly source of electric energy and usable heat.

In one example embodiment, a heating system utilizing heat provided by an electrical fuel cell is disclosed. In an illustrated example system, a storage tank is configured to store a fluid, such as water, that is heated by way of heat that is produced by a fuel cell generating electrical power. The system further includes a radiating unit that can be installed at a space requiring a source of heat, such as in a residential home, office or other structure. The radiating unit is configured to receive the fluid contained within the storage unit, and then emit the heat contained within the fluid, so as to heat the surrounding structure.

In one embodiment, a first connection line is used to connect the storage tank to the radiating unit, and thereby allow heated fluid to flow to the radiating unit. Heat contained within the fluid can then be released by the radiating unit to the space being heated. Once heat is released from the fluid, it is returned to the storage tank via a second connection line, where it can then be re-heated by the fuel cell. Thus, as heat is released from the fluid at the radiator, it is channeled back to the storage tank, re-heated by virtue of the operating fuel cell, and returned to the radiator. In one embodiment, the circulation of the fluid is provided by way of a pump, or similar mechanism. In illustrated embodiments, the rate at which heat is released via the radiator can be controlled by adjusting the rate at which fluid flows to the radiator. A lower fluid flow rate will result in less heat being emitted, while a higher flow rate will result in more heat.

In an optional embodiment, the amount of heat provided to the fluid can be increased by incorporating a secondary heat source within the system. In another optional embodiment, excess heat can be released from the system by way of a supplementary radiating device.

Thus, embodiments of the present invention provide a fuel cell system that can be used as a low cost and environmentally safe source of electrical power. In addition, the system is implemented so as to utilize the byproducts of the electrical power generation - namely, water and/or heat - to provide a usable source of heat to a structure such as a residential home or office.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
Figures 1 and 2 are schematic views of an example fuel cell heating and electricity generating system according to a first example embodiment of the present invention;
Figure 3 is a piping diagram showing a fuel cell and a storage tank of the fuel cell heating and electricity generating system according to an example embodiment of the present invention;
Figure 4 is a plane view showing one implementation of a radiating unit of the fuel cell heating and electricity generating system according to an example embodiment of the present invention;
Figure 5 is a piping diagram showing the use of an optional supplementary radiating unit of the fuel cell heating and electricity generating system according to another example embodiment of the present invention; and
Figure 6 is a schematic view of a fuel cell heating and electricity generating system according to a second example embodiment of the present invention.

### DETAILED DESCRIPTION OF THE INVENTION

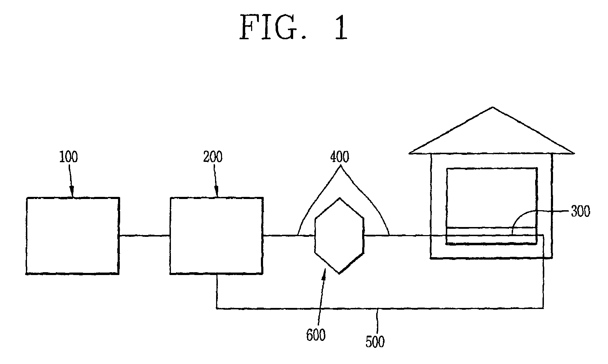

Reference will now be made to some example embodiments of the present invention relevant details of which are disclosed in the accompanying drawings. Referring first to Figure 1, a schematic view of a fuel cell heating and electricity generating system according to a first example embodiment of the present invention is shown. The example system of Figure 1 includes a fuel cell 100 and a storage tank 200 for storing a fluid. The fluid stored in the storage tank 200 is heated by virtue of the fuel cell 100 operation. For example, the fluid can be heated by way of the thermal energy that is generated and released during an electrochemical reaction between a fuel and oxygen supplied to the fuel cell 100. The fluid can be, for example, an appropriate liquid such as water, although any other appropriate fluid substance - liquid or gaseous - that is capable of retaining heat can be used. Depending on the particular needs of the system, the storage tank 200 can also be covered with an insulating material in order to insulate the heated fluid contained therein and thereby further increase the efficiency of the system.

The example system of Figure 1 further includes a radiating unit 300. The radiating unit 300 is configured so as to capture and release heat that is contained in fluid flowing therein and can be implemented in any one of a number of ways as will be appreciated by one of skill in the art. The radiating unit 300 can be located, for example, inside a floor of a home or other structure or location in order to provide heat thereto. The system of Figure 1 includes a first connection line 400 for connecting the storage tank 200 to the radiating unit 300 and a second connection line 500 for connecting the radiating unit 300 back to the storage tank 200. The first connection line 400 enables heated fluid to flow from the storage tank 200 to the radiating unit 300, where heat is released from the fluid into the structure. Once heat is released, the second connection line 500 enables fluid to flow from the radiating unit 300 back to the storage tank 200 so that it can be re-heated. The process can then be continued so as to continuously supply heat to the structure.

In the example embodiment, the fuel cell 100 is configured to continuously generate electric energy while hydrogen and oxygen are supplied thereto. The fuel cell 100 is also configured to generate heat and water as byproducts. The fuel cell 100 can be one of various types of fuel cells including, but not limited to, a Phosphoric Acid Fuel Cell (PAFC), an Alkaline Fuel Cell (AFC), a Proton Exchange Membrance Fuel Cell (PEMFC), a Molten Carbonate Fuel Cell (MCFC), a Solid Oxide Fuel Cell (SOFC), a Direct Methanol Fuel Cell (DMFC), or combinations thereof. The fuel cell 100 of the system of Figure 1 may be located in various locations, including at a warehouse or in a basement of a home or other structure.

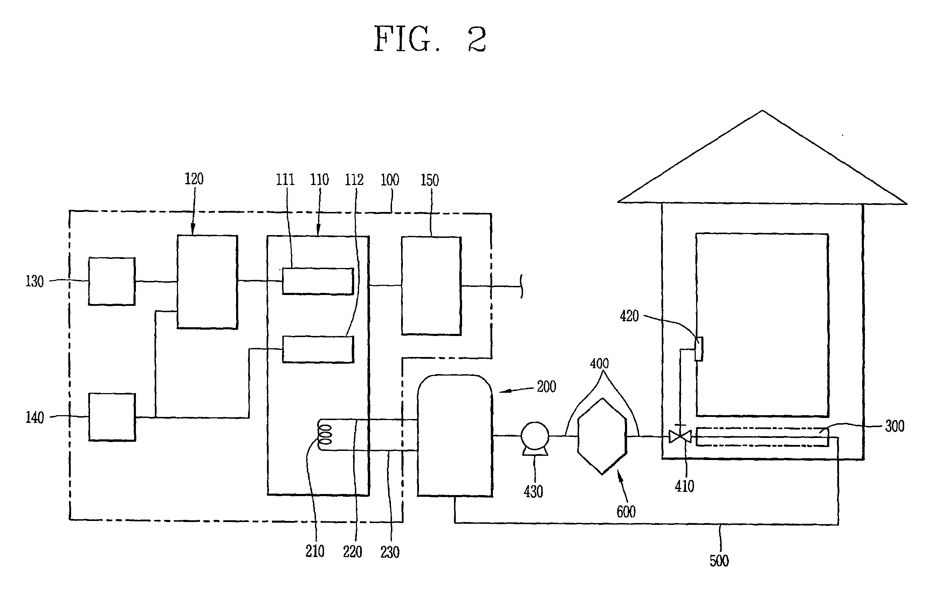

As shown in Figure 2, in an example embodiment the fuel cell 100 includes a stack 110. The stack 110 includes an anode 111 and a cathode 112 for generating electric energy by an electrochemical exothermic reaction between hydrogen supplied to the anode 111 and oxygen supplied to the cathode 112. The electrochemical exothermic reaction also produces heat and water as byproducts. The exemplary fuel cell 100 also includes a reformer 120 for refining hydrogen from hydrogen-rich fuels. The reformer 120 is configured to supply the refined hydrogen to the anode 111 of the stack 110. The fuel cell 100 further includes a fuel supplying unit 130 for supplying a hydrogen-rich fuel to the reformer 120, an air supplying unit 140 for supplying air to the reformer 120 and the cathode 112 of the stack 110; and an electricity output unit 150 for converting electric energy generated from the stack 110 to a commercial power.

The fuel from the fuel supplying unit 130 can be a hydrocarbon-based fuel such as liquefied natural gas (LNG), liquefied petroleum gas (LPG), methanol (CH30H), or any other suitable fuel. The fuel undergoes a desulfurizing process, a reforming process, and a hydrogen refining process in the reformer 120. The refined hydrogen is then supplied to the anode 111 of the stack 110.

In one example embodiment, heat generated as a byproduct of the operation of the stack 110 of the fuel cell 100 is supplied to the storage tank 200 using a heat exchanging unit 210 at the stack 110 of the fuel cell 100. The heat exchanging unit 210 is thus configured to continuously heat fluid and then introduce the heated fluid to the storage tank 200. One side of the heat exchanging unit 210 is connected to the storage tank 200 by an inlet line 220, and another side of the heat exchanging unit 210 is connected to the storage tank 200 by an outlet line 230.

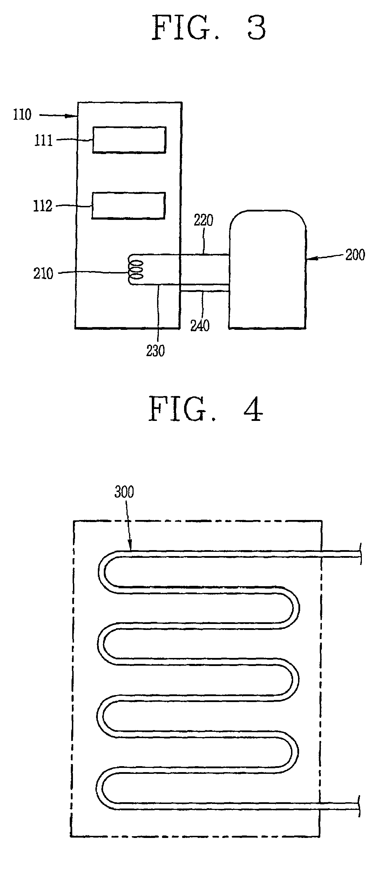

In another example embodiment, heat generated as a byproduct of the operation of the stack 110 of the fuel cell 100 is stored in the storage tank 200 using the heat exchanging unit 210 disclosed in Figure 3. Like the heat exchanging unit 210 of Figure 2, the heat exchanging unit 210 disclosed in Figure 3 is installed at the stack 110 of the fuel cell 100. The inlet line 220 and the outlet line 230 are likewise connected between the heat exchanging unit 210 and the storage tank 200. In addition, however, the example embodiment of Figure 3 includes a supplementary inlet line 240 for introducing water generated as a byproduct of the electrochemical reaction in the stack 110 to the storage tank 200. The supplementary inlet line 240 is connected between the stack 110 and the storage tank 200. The water flowing into the storage tank 200 through the supplementary inlet line 240 is also heated as a result of the electrochemical exothermic reaction at the stack 110.

When more than a predetermined amount of fluid is contained in the storage tank 200, a supplementary outlet line (not shown) can be used to release the excess fluid. The supplementary outline line can be installed at the storage tank 200, at the first connection line 400, or at the second connection line 500.

In illustrated embodiments, a supplementary heating unit 600 for heating fluid can also be provided, for example at the first connection line 400. Various types of heaters can serve as the supplementary heating unit 600 including, for example, an electric heater or a supplementary burner. In this embodiment, when the temperature of the fluid inside the storage tank 200 or a fluid flowing through the first connection line 400 is less than a predetermined temperature, the supplementary heating unit 600 can function to heat the fluid up to the predetermined temperature.

A flow amount controlling unit 410 for controlling the flow of the fluid through the radiating unit 300 can be positioned at or near the intersection of the first connection line 400 and the radiating unit 300. A controlling unit 420 for controlling the flow amount controlling unit 410 can be in communication with the flow amount controlling unit 410 and positioned inside or outside the home or structure in which the radiating unit 300 is located. The radiating unit can be disposed within the structure to be heated in any appropriate manner to release heat to the structure. For example, the radiating unit 300 can be disposed within a floor of a home or other structure so as to release heat through the floor. In that configuration, the radiator might be arranged as a curved line so as to release heat in a uniform manner. In one embodiment, the curved line might be implemented in an alternating layout, as disclosed in Figure 4. In one embodiment, the alternating layout can further include a plurality of radiating fins (not shown) coupled to the radiator 300 so as to insure better and more uniform distribution of heat. It will be appreciated that the radiating unit 300 can be located in several different locations within a home or other structure. For example, the radiating unit 300 can be located inside a floor or next to a wall. The radiating unit 300 can alternatively be located, for example, both in a floor and next to a wall. Other arrangements could be provided, depending on a variety of factors, including the type of structure being heated and its particular configuration, as well as the type of heating effect desired.

In the example system of Figure 2, a pump 430 for pumping fluid through the system is provided. The pump 430 can be connected to the first connection line 400. In one embodiment, the pump 430 can be connected to the first connection line 400 between the storage tank 200 and the supplementary heating unit 600, although it will be appreciated that it could be positioned at other points within the system.

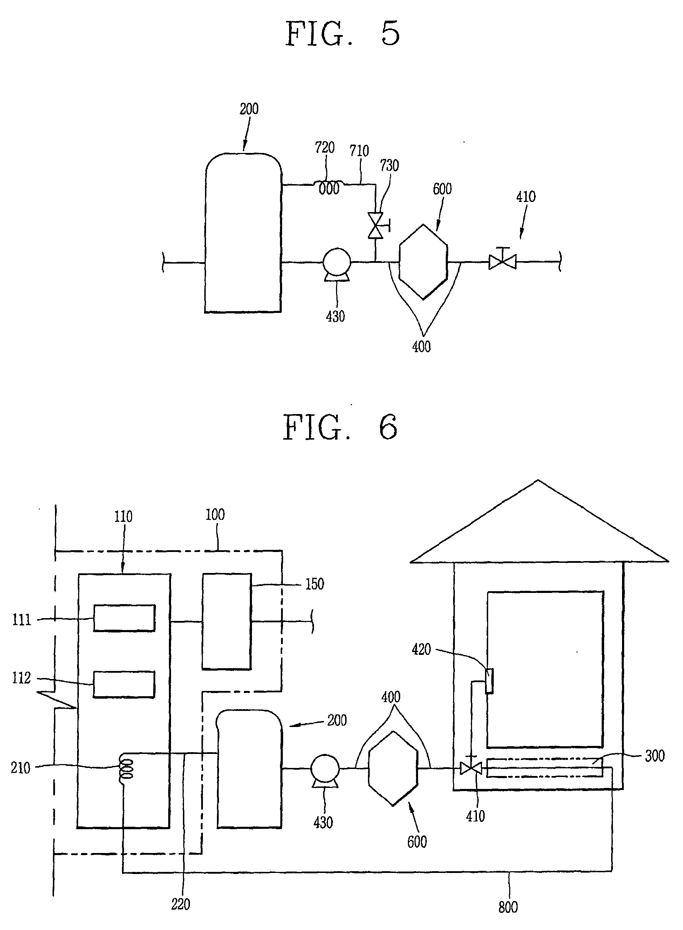

A supplementary radiating unit can also be used in conjunction with the storage tank 200 and the first connection line 400. The supplementary radiating unit can be used for releasing excess heat from the storage tank 200 when the fluid supply to the radiating unit 300 is shut off. One example supplementary radiating unit is disclosed in Figure 5. This arrangement insures that excess heat is no accumulated within the system.

The example supplementary radiating unit of Figure 5 includes a circulation line 710 connected to the first connection line 400. The circulation line 710 connects to the first connection line 400 at a position between the storage tank 200 and the supplementary heating unit 600. The circulation line 710 also connects at its other end to the storage tank 200. The supplementary radiating unit of Figure 5 also includes a supplementary radiating line 720 coupled to the circulation line 710. The supplementary radiating line 720 functions to release heat from a fluid flowing through the circulation line 710. The supplementary radiating unit of Figure 5 also includes a switching valve 730 mounted on the circulation line 710 between the first connection line 400 and the supplementary radiating line 720. The switching valve 730 can be used to control the amount of fluid flowing through line 720, and thus the amount of heat that is released via supplementary radiating line 720.

Figure 6 is a schematic view of a fuel cell heating and electricity generating system according to a second example embodiment of the present invention. Unlike the first example embodiment of the present invention of Figure 2, the system of Figure 6 does not include a second connection line 500 that is connected directly to the storage tank 200. Instead, in the embodiment of Figure 6 a connection line 800 connects the radiating unit 300 to the storage unit 200 via the stack 110 of the fuel cell 100. The connection line 800 is configured to allow fluid from the radiating unit 300 to be directly heated by the heat generated from the stack 110 of the fuel cell 100 before it is transferred to the storage unit 200. Hence, the fluid that has passed through the radiating unit 300 and is returned via the connection line 800 is heated by the heat generated from the stack 110, and then is returned into the storage tank 200.

The other elements of the system of Figure 6 are identical to the elements of the system of Figure 2 with corresponding reference numerals, and thus their detailed explanation will be omitted. The supplementary heating unit and the supplementary radiating unit disclosed above in connection with the system of Figure 2 can also be utilized in the system of Figure 6.

Having explained the configuration and function of the elements of the systems of Figures 2 and 6, one example operation of the system of Figures 2 and 6 will now be explained.

First, a fuel is supplied to the reformer 120 through the fuel supplying unit 130, and the reformer 120 refines hydrogen from the fuel in order to supply refined hydrogen to the anode 111 of the stack 110. Also, air is supplied to the reformer 120 by the air supplying unit 140. Air is also supplied to the cathode 112 of the stack 110 by the air supplying unit 140. Hydrogen supplied to the anode 111 of the stack 110 is electrochemically reacted with oxygen supplied to the cathode 112 of the stack 110 in an exothermic reaction, thereby generating electric energy, with heat and water as byproducts.

Heat generated from the stack 110 of the fuel cell 100 is then used to heat the fluid of the storage tank 200 by circulating the fluid through the inlet line 220, the heat exchanging unit 210, and the outlet line 230. The fluid stored in the storage tank 200 and heated by the heat generated from the stack 110 is then pumped into the radiating unit 300 through the first connection line 400. While moving through the radiating unit 300, the fluid emits heat outwardly, which in turn heats, for example, the floor of a home in which the radiating unit 300 is located.

In the system of Figure 2, after heat has been released from the fluid via the radiating unit 300, the fluid is returned to the storage tank 200 through the second connection line 500 and reheated in the manner described above. Alternatively, in the system of Figure 6, the fluid is returned directly to the fuel cell 100 through the connection line 800, where it absorbs heat generated from the fuel cell 100 before being returned to the storage tank 200 through the inlet line 220. As the fluid stored in the storage tank 200 is repeatedly circulated in either the system of Figure 2 or the system of Figure 6, the structure is continuously heated.

The temperature of the structure being heated, such as the floor of a home, can be controlled by adjusting the flow amount controlling unit 410 using the controlling unit 420, thereby regulating the amount of fluid flowing through the radiator 300. Thus, the temperature of the indoor floor can be increased by increasing the amount of the fluid flowing through the flow amount controlling unit 410. The temperature of the indoor floor can be decreased by decreasing the amount of the fluid flowing through the flow amount controlling unit 410.

In this example, the temperature of the indoor floor can optionally be increased to a temperature higher than the temperature of the fluid in the storage tank 200 by heating the fluid as it flows through the first connection line 400 using the supplementary heating unit 600. The supplementary heating unit 600 can thus be used to increase the temperature of the fluid flowing through first connection line 400 and into the radiating unit 300. Also, the circulation speed of the fluid flowing through the radiating unit 300 can be adjusted using the pump 430.

When an outdoor temperature of a home or other structure is high, such as generally is the case during the summer period, the flow of the fluid to the radiating unit 300 can be shut off using the flow amount controlling unit 410. At the same time, the supplementary radiating unit, an example of which is disclosed in Figure 5, can be operated to release heat from the fluid stored in the storage tank 200. As the heated fluid stored in the storage tank 200 is circulated through the circulation line 710 and the supplementary radiating line 720, the heated fluid is cooled. The circulation speed of the fluid flowing through the systems of Figures 2 and 6 can be increased by operating the pump 430. The pump 430 can thus be used to enhance a radiating efficiency of the systems of Figures 2 and 6.

The manner by which a structure is heated depends partly on how the radiating unit is positioned within the structure. For example, when the radiating unit 300 is installed on a wall or at another similar interior location of a structure, the radiating unit 300 heats the interior by conducting heat directly to the air inside the structure. Alternatively, when the radiating unit 300 is installed inside a floor of a home or a building, the radiating unit 300 heats not only the air inside the structure but also the floor of the structure.

Electric energy generated from the fuel cell 100 is also supplied to a home or other structure in order to power, for example, electric appliances and home lighting devices associated with the structure.

The fuel cell 100 generates electric energy, heat, and water during the electrochemical reaction between hydrogen and oxygen, without generating pollutants in quantities comparable to those generated in the combustion of fossil fuels. Furthermore, since the fuel cell 100 can refine hydrogen from a hydrogen-rich fuel or can directly use a hydrogen-rich liquid fuel, the types of usable fuels is expanded and a usage amount thereof is decreased.

The fuel cell heating and electricity generating system according to the present invention uses heat given off by the generation of electric energy to heat the air and/or floor of a home or other structure. This system results in the generation of fewer pollutants and is less expensive than using fossil fuels as a source of energy. The use of the example systems disclosed herein can result, therefore, in a decreased dependency on energy produced from fossil fuels.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell heating system, the system comprising:
a fuel cell;
a storage tank configured to store a liquid heated by heat generated at the fuel cell;
a radiating unit installed at a space requiring a heat supply;
a first connection line connecting the storage tank to the radiating unit, the first connection line configured to facilitate the flow of the heated fluid from the storage tank to the radiating unit; and
a second connection line connecting the storage tank to the radiating unit, the second connection line configured to facilitate the flow of fluid from the radiating unit to the storage tank.

2. The system of claim 1, wherein the radiating unit is installed inside a floor of a home or other structure.

3. The system of claim 2, wherein the radiating unit is formed to have a curved shape.

4. The system of claim 3, wherein the curved shape is implemented as a alternating curved form.

5. The system of claim 1, wherein the radiating unit is installed at an inner space of a home or other structure.

6. The system of claim 5, wherein the radiating unit includes a curved line and a plurality of radiating fins coupled to the curved line.

7. The system of claim 1, further comprising a supplementary heating unit, the supplementary heating unit configured to heat fluid flowing to the radiating unit.

8. The system of claim 1, further comprising a supplementary radiating unit; the supplementary radiating unit configured to selectively release heat from fluid flowing through the first connection line.

9. The system of claim 8, wherein the supplementary radiating unit includes:
a circulation line connecting the storage tank to the first connection line;
a supplementary radiating line coupled to the circulation line; and
a switching valve mounted at the circulation line.

10. A fuel cell heating system, the system comprising:
a fuel cell;
a storage tank configured to store a liquid heated by reaction heat generated at the fuel cell;
a radiating unit configured to emit heat contained in fluid flowing therein;
a first connection line connecting the storage tank to the radiating unit, the first connection line configured to facilitate the flow of fluid from the storage tank to the radiating unit; and
a second connection line connecting the storage tank to the radiating unit, the second connection line configured to facilitate the flow of fluid from the radiating unit to the storage tank via the fuel cell.
